# EUROPÄISCHE PATENTANMELDUNG

(11) **EP 2 821 656 A1**
(43) Veröffentlichungstag der Anmeldung: **07.01.2015**
(21) Anmeldenummer: 14002243.5
(22) Anmeldetag: 01.07.2014
(51) Int. Cl.: F16B 37/04

(54) **Schnellbefestigungselement**

(30) Priorität: 04.07.2013 DE 102013011155
(71) Anmelder: Secura Services AG, 8404 Winterthur (CH)
(72) Erfinder: Müller, Harald, 8404 Winterthur (DE)
(74) Vertreter: Erb, Henning

(57) **Zusammenfassung**

Ein Befestigungselement dient zum Verankern von Lasten an Profilschienen. Es weist eine Kopfplatte (12), eine Schließmutter (14) und ein Kunststoffelement (16)auf, das die Schließmutter (14) mit der Kopfplatte (12) verbindet. Das Kunststoffelement (16) besitzt eine Aufnahme (24), in die die Schließmutter (14) derart eingeschoben ist, dass eine Gewindebohrung (28) in der Schließmutter (14) mit einer Bohrung (30) in der Kopfplatte (12) fluchtet. Um eine elastische Bewegung der Schließmutter (14) bei gleichzeitig stabilem Kunststoffelement zu ermöglichen, wird vorgeschlagen, dass die Aufnahme (24) an ihrer der Kopfplatte (12) abgewandten Seite eine elastische Auflagerung (32) für die Schließmutter (14) aufweist.

## Beschreibung

Die vorliegende Erfindung betrifft ein Befestigungselement zum Verankern von Lasten an Profilschienen. Bekannte Ausführungsformen besitzen eine Kopfplatte, eine Schließmutter zum Verankern in der Profilschiene und ein Kunststoffelement, das die Schließmutter mit der Kopfplatte verbindet, wobei das Kunststoffelement mit einer Aufnahme versehen ist, in die die Schließmutter seitlich derart eingeschoben ist, dass eine Gewindebohrung in der Schließmutter mit einer Bohrung in der Kopfplatte fluchtet.

Ein derartiges Befestigungselement ist beispielsweise aus der DE 20 2007 019 077 U1 bekannt. Bei der dort gezeigten Ausführungsform sorgen Schlitze im Bereich des Kunststoffelements zwischen der Kopfplatte und der Aufnahme für eine gewisse Elastizität, so dass die Schließmutter beim Einsetzen und anschließendem Verdrehen des Befestigungselements in den Schlitz einer Profilschiene geringfügig ausweichen kann. Es hat sich gezeigt, dass die Elastizität nur minimale Wegstrecken ermöglicht und überdies das Kunststoffelement stark geschwächt wird.

Die Aufgabe der vorliegenden Erfindung besteht darin, ein Befestigungselement zu schaffen, das eine federnde Ausweichbewegung der Schließmutter unter Vermeidung der zuvor genannten Nachteile ermöglicht.

Erfindungsgemäß wird die Aufgabe durch ein Befestigungselement der eingangs beschriebenen Art gelöst, bei welchem die Aufnahme an ihrer der Kopfplatte abgewandten Seite eine elastische Auflage für die Schließmutter aufweist.

Bedingt dadurch, dass die Elastizität konstruktiv aus dem Übergangsbereich zwischen Kopfplatte und Schließmutter in den Randbereich des Kunststoffelements verlegt wird, kann einerseits ein größerer Verschiebeweg zur Verfügung gestellt werden und andererseits wird das Kunststoffelement im Bereich zwischen Kopfplatte und Schließmutter nicht geschwächt.

Eine bevorzugte Ausführungsform der Erfindung sieht vor, dass die elastische Aufnahme durch an das Kunststoffelement angeformte Federlaschen ausgebildet ist. Auf diese Weise werden zusätzliche Teile vermieden, wobei die Festigkeit unproblematisch ist, da bei einer Vorverankerung keine großen elastischen Kräfte aufgebaut werden und die Schließmutter abschließend mit Hilfe einer Spannschraube gegen die Profilschiene verspannt wird, wobei die Reaktionskräfte durch die Kopfplatte unter gegebenenfalls einem Zwischenlager eines Montageelements aufgenommen werden.

Beispielsweise kann das Kunststoffelement hohlzylindrisch mit einem Außendurchmesser ausgebildet sein, der größer ist als die Breite der Schließmutter. Durch diese Ausgestaltung ergibt sich im Bereich der Aufnahme dann ein seitliches Übergreifen der Schließmutter durch zwei Streben des Kunststoffelements. Diese können beispielsweise so ausgebildet sein, dass sie die Schließmutter drehstarr umgreifen.

In einer bevorzugten Weiterbildung der Erfindung ist vorgesehen, dass die Streben auf der der Kopfplatte abgewandten Seite der Aufnahme in einen ringförmigen Auflagebereich übergehen.

Bei dieser Ausführungsform lässt sich die elastische Auflage beispielsweise dadurch konstruktiv umsetzen, dass der ringförmige Auflagebereich wellenförmig ausgebildet und elastisch verformbar ist. Dadurch ergibt sich ein konstruktiv besonders einfaches Befestigungselement, das lediglich aus den drei genannten Teilen Kopfplatte, Kunststoffelement und Schließmutter besteht und das dennoch eine Klemmstellung vor dem eigentlichen Eindrehen der Spannschraube durch elastische Anlage der Schließmutter an den Unterseiten der Schenkel einer Profilschiene ermöglicht.

Eine besonders zweckmäßige Ausgestaltung des Befestigungselements sieht vor, dass die zwischen den Streben liegenden Abschnitte des ringförmigen Auflagebereiches zur Aufnahme hin gewellt sind und die Schließmutter elastisch gegen die gegenüberliegende Flanke der Aufnahme drücken.

Die Befestigung des Kunststoffelements an der Kopfplatte kann beispielsweise in der Art und Weise gelöst sein, dass das Kunststoffelement zwei Rastnasen aufweist, die in Aufnahmen der Kopfplatte eingerastet sind.

Wie bereits erwähnt, können Lasten entweder gegen die Oberseite der Kopfplatte verschraubt werden oder es können plattenartige Montageelemente zwischen der Kopfplatte und der Profilschiene eingespannt werden. Um einen ebenen Auflagebereich auf der Oberseite der Kopfplatte zu erhalten, ist in bevorzugter Weiterbildung der Erfindung vorgesehen, dass die Kopfplatte einen erhöhten Bereich aufweist, in welchem mittig die Bohrung vorgesehen ist. Die Aufnahmen für die Rastnasen des Kunststoffelements sind vorzugsweise am Rand des erhöhten Bereiches ausgebildet, so dass die eingerasteten Rastnasen des Kunststoffelements nicht über die durch den erhöhten Bereich gebildete Ebenen hinausragen und das Befestigen von Lasten behindern.

Nachfolgend wird anhand der beigefügten Zeichnungen näher auf ein Ausführungsbeispiel der Erfindung eingegangen. Es zeigen:
- Fig. 1: eine Schrägansicht eines Befestigungselements;
- Fig. 2: eine Schrägansicht des Befestigungselements von unten;
- Fig. 3: eine Seitenansicht des Befestigungselements;
- Fig. 4: eine um 90° gedrehte Seitenansicht des Befestigungelements;
- Fig. 5: eine Seitenansicht einer weiteren Ausführungsform eines Befestigungselements.

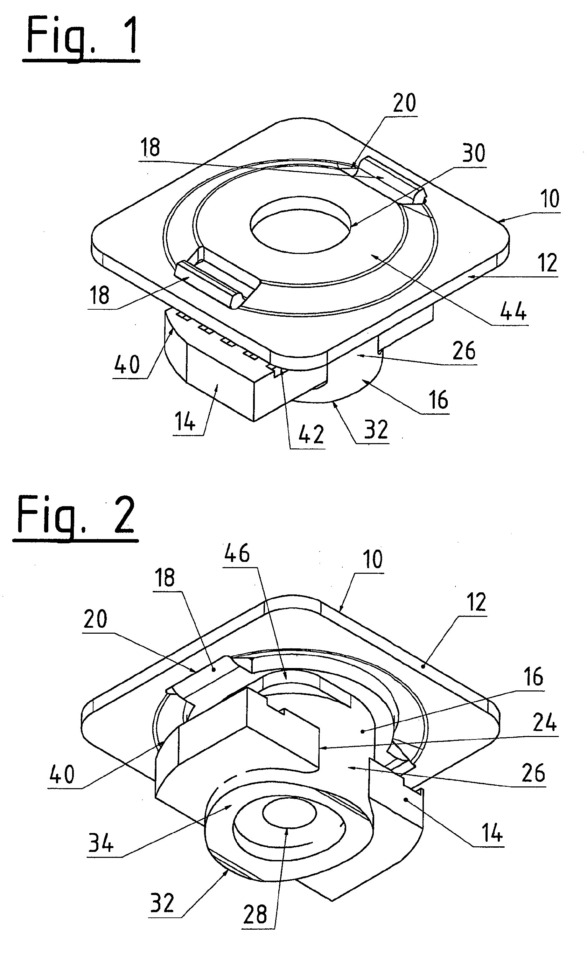

In Fig. 1 ist ein Befestigungselement 10 gezeigt, wie es zur Verankerung von Lasten an Profilschienen mit c-förmigem Querschnitt vorgesehen ist. Das Befestigungselement 10 besteht aus einer Kopfplatte 12, einer Schließmutter 14, sowie einem Kunststoffelement 16, das mit Hilfe von Rastnasen 18 in Aufnahmen 20 in der Kopfplatte 12 eingerastet ist. Im übrigen besteht das Kunststoffelement 16 aus einem hohlzylindrischem Körper 22, der einen etwas größeren Durchmesser als die Breite der Schließmutter 14 besitzt. Um diese an dem Kunststoffelement halten zu können, ist eine Aufnahme 24 vorgesehen, die eine Breite entsprechend der Breite der Schließmutter 14 aufweist, so dass verbleibende Streben 26 des hohlzylindrischen Bereiches 22 im Bereich der Aufnahme 24 die Schließmutter 14 seitlich drehstarr übergreifen.

Das Kunststoffelement 16 kann im Bereich der Aufnahme 24 Rippen (nicht gezeigt) aufweisen, mit Hilfe derer die Schließmutter, beispielsweise über korrespondierende Ausnehmungen, mittig in der Aufnahme gehalten ist, so dass eine Gewindebohrung 28 in der Schließmutter mittig zu einer Bohrung 30 der Kopfplatte 12 liegt. Der Halt kann auch durch keine Klemmwirkung realisiert sein.

Der der Kopfplatte 12 abgewandte Bereich der Aufnahme 24 ist durch einen ringförmigen Auflagebereich 32 ausgebildet, der sich unmittelbar an die Streben 26 anschließt und einstückig mit dem Kunststoffelement 16 ausgebildet ist. Um eine elastische Auflage der Schließmutter 14 zu ermöglichen, ist der ringförmige Auflagebereich 32 gewellt ausgebildet, wobei zwischen den Streben 26 liegende Abschnitte 34 entsprechend in Richtung des Aufnahmequerschnitts für die Schließmutter 14 gewellt sind.

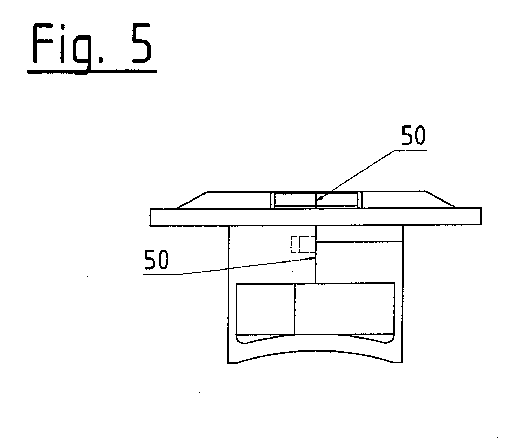

Eine weitere Ausbildung der vorliegenden Erfindung besteht darin (siehe Fig. 5), dass der hohlzylindrische Körper 22 und die Rastnasen 18 mit einem Schlitz 50 versehen sind. Über die elastischen Abschnitte 34 lässt sich das Kunststoffelement 16 aufklappen um die Schließmutter 14 zu montieren.

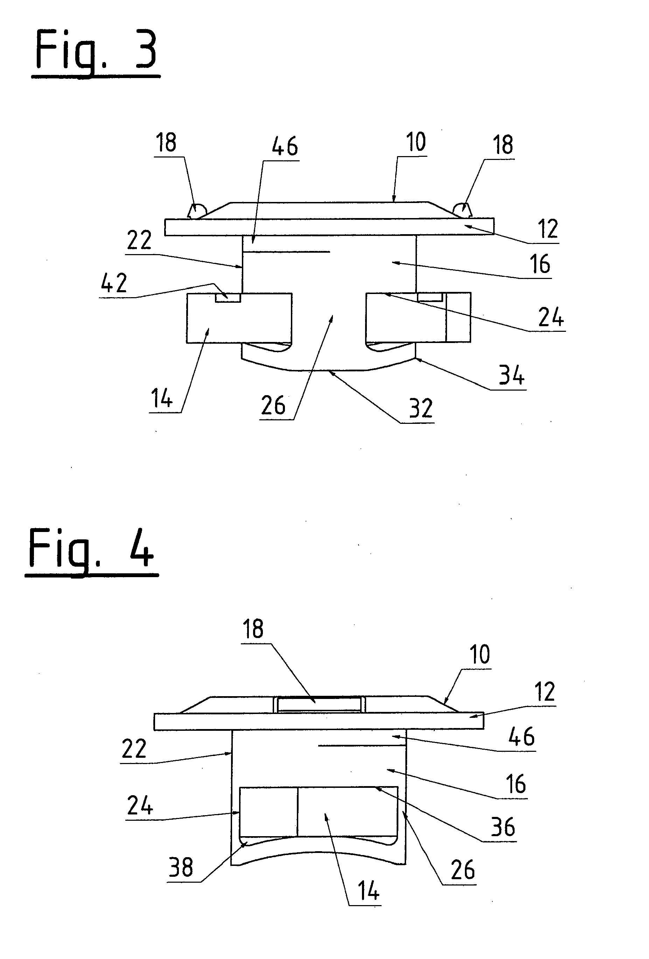

Wie aus Fig. 4 gut zu erkennen ist, drücken die gewellten Abschnitte 34 die Schließmutter elastisch gegen den gegenüberliegenden Rand 36 der Aufnahme 24, so dass die Schließmutter im wesentlichen spielfrei gehalten ist. Im Bereich der Streben 26 ist in Fig. 4 gut ein Bereich 38 mit Luft zu erkennen, der den möglichen Bewegungsraum der Schließmutter 14 veranschaulicht, die sich unter elastischer Verformung der gewellten Abschnitte 34 vom Rand 36 der Aufnahme 24 entfernen kann, wenn das Befestigungselement 10 in einer Profilschiene eingesetzt und dann bis zu den Anschläge 46 um ca. 90° verdreht wird. Hierbei gelangen Schrägen 40 der Schließmutter unter Ränder der Schenkel der Profilschienen, wobei nach dem Verdrehen profilierte Ausnehmungen 42 an der Oberseite der Schließmutter 14 mit einer korrespondierenden Formgebung der Unterseiten der Schenkel der Profilschiene verzahnen können.

Wie aus Fig. 1 gut zu erkennen ist, ist die Oberseite der Kopfplatte mit einem kreisförmig erhöhten Bereich 44 ausgebildet, an dessen ebener Oberseite Lasten mit Hilfe einer in die Bohrung 30 eingesteckten und in die Gewindebohrung 28 der Schließmutter eingedrehten Spannschraube verspannt werden können. Gut zu erkennen ist in Fig. 1 die Anordnung der Aufnahmen 20 für die Rastnasen im Bereich des Randes des erhöhten Bereiches 44, so dass die Rastnasen 18 nicht über die Ebene des erhöhten Bereiches 44 überstehen, wie aus Fig. 3 gut zu erkennen ist.

## Patentansprüche

1. Befestigungselement zum Verankern von Lasten an Profilschienen, wobei das Befestigungselement eine Kopfplatte (12), eine Schließmutter (14) zum Verankern in der Profilschiene und ein Kunststoffelement (16) aufweist, das die Schließmutter (14) mit der Kopfplatte (12) verbindet, wobei das Kunststoffelement (16) mit einer Aufnahme (24) versehen ist, in die die Schließmutter (14) seitlich derart eingeschoben ist, dass eine Gewindebohrung (28) in der Schließmutter (14) mit einer Bohrung (30) in der Kopfplatte (12) fluchtet, **dadurch gekennzeichnet, dass** die Aufnahme (24) an ihrer der Kopfplatte (12) abgewandten Seite eine elastische Auflage (32) für die Schließmutter (14) aufweist.

2. Befestigungselement nach Anspruch 1, **dadurch gekennzeichnet, dass** die elastische Auflage durch an das Kunststoffelement (16) angeformte Federlaschen (34) ausgebildet ist.

3. Befestigungselement nach Anspruch 1 oder 2, **dadurch gekennzeichnet, dass** das Kunststoffelement (16) hohlzylindrisch mit einem Außendurchmesser ausgebildet ist, der größer ist als die Breite der Schließmutter (14).

4. Befestigungselement nach Anspruch 3, **dadurch gekennzeichnet, dass** im Bereich der Aufnahme (24) zwei Streben (26) die im Querschnitt im wesentlichen rechteckförmige Schließmutter (14) übergreifen.

5. Befestigungselement nach Anspruch 4, **dadurch gekennzeichnet, dass** die Streben (26) an ihren der Kopfplatte (12) abgewandten Enden in einen ringförmigen Auflagebereich (32) übergehen.

6. Befestigungselement nach Anspruch 5, **dadurch gekennzeichnet, dass** der ringförmige Auflagebereich (32) wellenförmig ausgebildet und elastisch verformbar ist.

7. Befestigungselement nach Anspruch 6, **dadurch gekennzeichnet, dass** die zwischen den Streben (26) liegenden Abschnitte (34) des ringförmigen Auflagebereiches (32) zur Aufnahme (24) hin gewellt sind und die Schließmutter (14) elastisch in Richtung des gegenüberliegenden Randes (36) der Aufnahme (24) drücken.

8. Befestigungselement nach einem der vorhergehenden Ansprüche, **dadurch gekennzeichnet, dass** das Kunststoffelement (16) zwei Rastnasen (18) aufweist, die in Aufnahmen (20) der Kopfplatte (12) eingerastet sind.

9. Befestigungselement nach einem der vorhergehenden Ansprüche, **dadurch gekennzeichnet, dass** die Kopfplatte (12) einen erhöhten Bereich (44) aufweist, in welchem mittig die Bohrung (30) vorgesehen ist.

10. Befestigungselement nach Anspruch 9, **dadurch gekennzeichnet, dass** die Aufnahmen (20) für die Rastnasen (18) im Rand des erhöhten Bereiches (44) ausgebildet sind.

11. Befestigungselement nach einem der vorhergehenden Ansprüche, **dadurch gekennzeichnet, dass** das Kunststoffelement (16) zwei Anschläge (46) aufweist.

12. Befestigungselement nach einem der vorhergehenden Ansprüche, **dadurch gekennzeichnet, dass** das Kunststoffelement (16) im hohlzylindrischen Körper (22) und den Rastnasen (18) einen Schlitz (50) aufweist.
